# EUROPÄISCHE PATENTSCHRIFT

(11) **EP 1 860 346 B1**
(45) Veröffentlichungstag und Bekanntmachung des Hinweises auf die Patenterteilung: **02.11.2011**
(21) Anmeldenummer: 07107531.1
(22) Anmeldetag: 04.05.2007
(51) Int. Cl.: F16H 7/08

(54) **Führungs- und Spannvorrichtung für Kettentriebe**
Guide and clamping device for chain drives
Dispositif de guidage et de serrage pour entraînements de chaînes

(30) Priorität: 23.05.2006 DE 102006024082
(43) Veröffentlichungstag der Anmeldung: 28.11.2007
(73) Patentinhaber: AFT Atlas Fahrzeugtechnik GmbH, 58791 Werdohl (DE)
(72) Erfinder: Wodtke, Hans-Walter, 53773 Hennes (DE)
(74) Vertreter: Meyer, Rudolf

(56) Entgegenhaltungen:
- EP-A- 1 310 700
- EP-A- 1 850 033
- WO-A-2007/033879
- DE-A1- 4 426 163
- DE-A1- 10 341 823
- DE-A1- 19 914 003
- DE-A1- 19 959 521

## Beschreibung

### Gebiet der Erfindung

Die Erfindung betrifft eine Führungs- und Spannvorrichtung für Kettentriebe an Fahrzeugen gemäß dem Oberbegriff des Anspruchs 1.

### Hintergrund der Erfindung

Insbesondere in Fahrzeugen werden Kettentriebe verwendet, um beispielsweise mittels einer Kurbelwelle eine Nockenwelle einer Brennkraftmaschine anzutreiben, welche die Einlass- bzw. Auslassventile derselben öffnet und schließt. Ein derartiger Kettentrieb ist beispielsweise durch die DE 199 08 287 A1 bekannt.

In einem Kettentrieb entstehen durch den polygonalen Lauf der Kette radiale und tangentiale periodische Kraftschwankungen an der Kette, den Kettenrädern sowie an zugeordneten Führungs- und Spannelementen, die mit entsprechenden Schwingungen der betreffenden Bauteile einhergehen. Die Kraftschwankungen werden in die den Kettentrieb tragende Struktur eingeleitet und führen unter anderem zu Geräuschen, die als Kettenheulen bezeichnet werden.

Um diesem Problem zu begegnen, sind eine Vielzahl passiver Maßnahmen bekannt, wie beispielsweise elastisch gelagerte Führungs- und/oder Spannschienen, gummierte Kettenräder, Kettenräder mit Fliehringen und dergleichen mehr. Durch diese an sich bekannten Lösungen sind sicherlich positive Effekte im Hinblick auf eine Bekämpfung der genannten Kettenheulgeräusche zu verzeichnen, jedoch haben sich in der Praxis bei diesen Vorrichtungen eine geringe Wirkung, eine begrenzte Haltbarkeit, negative Auswirkungen im Bezug auf die Kettentriebsdynamik sowie ein erhöhter Bauraumbedarf als nachteilig bemerkbar gemacht.

Des Weiteren kommen leisere Kettentypen, wie Rollenketten und Zahnketten zum Einsatz, bei deren Herstellung jedoch erhöhte Kosten entstehen, sowie ein nachteiliges Verschleißverhalten festzustellen ist.

Demgegenüber ist aus der DE 199 59 521 A1 eine dynamisch ansteuerbare Führungs- und Spannvorrichtung für Endlostriebe, wie ein Steuertrieb einer Verbrennungskraftmaschine, sowie ein Verfahren zu deren Betreiben bekannt. Im Wesentlichen wird dabei ein dynamisch ansteuerbarer Aktuator in Form eines Piezoaktors genutzt, mit dessen Hilfe ein starres schienenförmiges Spannelement gegen das Zugmittel des Endlostriebes verlagerbar ist. Die Ansteuerung des Piezoaktors erfolgt in Abhängigkeit von Betriebsgrößen der Verbrennungskraftmaschine.

Schließlich ist aus der EP 1 310 700 A2 eine gattungsbildende Führungs- und Spannvorrichtung für Kettentriebe an Fahrzeugen bekannt, mit einem an einem tragenden Bauteil des Fahrzeugs festgelegten sowie in Wirkverbindung mit der Kette des Kettentriebes bringbaren Führungs- und Spannelement, wobei dieses durch eine in der Ebene des Kettentriebes beweglich angeordnete sowie am tragenden Bauteil sich abstützende Schiene gebildet ist. Diese Schiene ist zur Verringerung von durch den Kettentrieb erzeugten Schwingungen mittels zumindest eines Aktors mit einer in Richtung zur Kette wirkenden Kraft beaufschlagbar. Der Aktor ist dazu mit einer Steuerungseinheit verbunden. Die Schiene ist nach Art eines Trägers auf zwei Stützen lagernd ausgebildet, wobei die eine Abstützung durch ein ortsfest am tragenden Bauteil angeordnetes Schwenklager und die andere Abstützung durch ein eine Verschiebbarkeit in Längsrichtung der Schiene gestattendes Loslager gebildet ist. Zwischen den beiden Abstützungen ist der zumindest eine an der Schiene angreifende Aktor angeordnet. Die Schiene ist zudem derart biegeweich ausgebildet, dass eine elastische Biegung derselben innerhalb der mit dem Kettentrieb gemeinsam eingenommenen Ebene möglich ist.

### Aufgabe der Erfindung

Vor diesem Hintergrund liegt der Erfindung die Aufgabe zugrunde, eine weiter verbesserte Führungs- und Spannvorrichtung der gattungsgemäßen Art zu schaffen, die wirkungsvoll ein Kettenheulen an Kettentrieben verhindert oder zumindest reduziert.

### Zusammenfassung der Erfindung

Die Erfindung betrifft gemäß den Merkmalen des Hauptanspruchs eine Führungs- und Spannvorrichtung für Kettentriebe an Fahrzeugen, mit einem an einem tragenden Bauteil des Fahrzeugs festgelegten sowie in Wirkverbindung mit der Kette des Kettentriebes bringbaren Führungs- und Spannelement, wobei dieses durch eine in der Ebene des Kettentriebes beweglich angeordnete sowie am tragenden Bauteil sich abstützende Schiene gebildet ist, die zur Verringerung von durch den Kettentrieb erzeugten Schwingungen mittels zumindest eines Aktors mit einer in Richtung zur Kette wirkenden Kraft beaufschlagbar ist, wobei die Schiene nach Art eines Trägers auf zwei Stützen lagernd ausgebildet ist, wobei die eine Abstützung durch ein ortsfest am tragenden Bauteil angeordnetes Schwenklager und die andere Abstützung durch ein eine Verschiebbarkeit in Längsrichtung der Schiene gestattendes Loslager gebildet ist, wobei zwischen den beiden Abstützungen der zumindest eine an der Schiene angreifende Aktor angeordnet ist, und bei dem die Schiene derart biegeweich ausgebildet ist, dass eine elastische Biegung derselben innerhalb der mit dem Kettentrieb gemeinsam eingenommenen Ebene möglich ist. Zur Lösung der gestellten Aufgabe ist zudem vorgesehen, dass der Aktor als Piezo-Linearaktor ausgebildet ist, der einenends fest mit der Schiene verbunden ist und anderenends eine seismische Masse trägt.

Der Grundgedanke der Erfindung besteht im Wesentlichen darin, die Schiene derart in Grenzen biegeweich auszubilden, dass mit Hilfe des Aktors aktiv periodische Zusatzkräfte in den Kettentrieb eingeleitet werden können, welche die akustisch relevante Wirkung der polygonalen Kräfte, resultierend aus dem Lauf der Kette des Kettentriebes, ganz oder teilweise aufheben. Zudem wird weitestgehend unabhängig von der Auslenkung des Aktors die Schiene nahezu ideal an den sich jeweils einstellenden Kurvenverlauf der Kette anschmiegt, wodurch sich eine verbesserte Führung der Kette sowie eine optimale Schwingungsübertragung vom Aktor auf dieselbe ergeben. Als weiterer Vorteil ist durch die Eigenelastizität der Schiene eine zusätzliche Dämpfungswirkung festzustellen.

Folgende Weiterbildungen oder Ausgestaltungen dieser Führungs- und Spannvorrichtung können sich als günstig erweisen.

Die Schiene ist aus einem Metall- und/oder einem Kunststoff gebildet. Bei einer Ausführungsform aus einem Kunststoff verfügt die Schiene auf ihrer zur Kette weisenden Seite über eine abriebarme Oberfläche.

Bevorzugt ist zudem vorgesehen, dass die mit der Kette des Kettentriebes in direkter Wirkverbindung stehende Lauffläche der Schiene zur Kette hin in Laufrichtung derselben gesehen konvex ausgebildet ist.

Gemäß einer anderen Weiterbildung ist die Führungs- und Spannvorrichtung gemäß der Erfindung **dadurch gekennzeichnet, dass** die Schiene zumindest im Bereich einer Stütze ein überstehendes elastisch verformbares Ende aufweist.

Des Weiteren ist bevorzugt vorgesehen, dass der wenigstens eine Aktor innerhalb eines voll-aktiven Feedback-Regelkreises angeordnet und von einem zugeordneten Steuerungsgerät ansteuerbar ist. Die Steuerungssignale dieses Steuerungsgerätes sind durch letzteres zur Ansteuerung des zumindest einen Aktors in Abhängigkeit von aktuellen und durch den Betrieb des Kettentriebes in den Kettentrieb eingebrachten sowie sensorisch ermittelten Schwingungen bereitstellbar.

Zudem kann die Führungs- und Spannvorrichtung gemäß der Erfindung zumindest einen Sensor zur Ermittlung der durch den Betrieb des Kettentriebes in den Kettentrieb eingebrachten Schwingungen in Form eines Schwingungs- bzw. Beschleunigungssensors aufweisen. Der Schwingungs- bzw. Beschleunigungssensor kann dabei bevorzugt ein piezoelektrischer Schwingungs- bzw. Beschleunigungssensor mit einer seismischen Masse sein. In diesem Zusammenhang wird es als vorteilhaft beurteilt, wenn der wenigstens eine Aktor sowohl krafterzeugend als auch als Sensor ausgebildet ist.

Schließlich kann vorgesehen sein, dass der zumindest eine Aktor als Dämpfungselement (shunted piezo) oder als Schwingungsabsorber (tuned piezo) wirkend, passiv oder semiaktiv durch das erwähnte Steuerungsgerät schaltbar oder verschaltet ist.

### Kurze Beschreibung der Zeichnungen

Die Erfindung wird im Folgenden anhand der beiliegenden Zeichnung an einem Ausführungsbeispiel näher erläutert. In der Zeichnung zeigt
- Fig. 1: schematisch eine Führungs- und Spannvorrichtung für Kettentriebe nach dem Stand der Technik, sowie
- Fig. 2: eine erfindungsgemäß ausgebildete Führungs- und Spannvorrichtung.

### Detaillierte Beschreibung der Zeichnungen

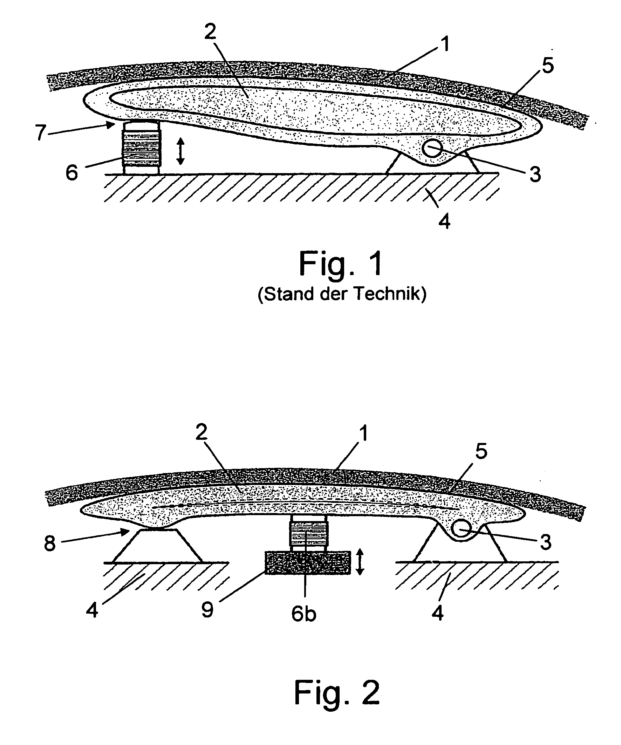

Fig. 1 zeigt demnach einen ausgewählten Abschnitt einer Kette 1 des Kettentriebes eines Fahrzeugs im unmittelbaren Bereich einer an sich bekannten Führungs- und Spannvorrichtung, wobei die Kette 1 eine Verbindung zwischen beispielsweise einer Kurbelwelle und einer von derselben antreibbaren Nockenwelle einer Brennkraftmaschine des Fahrzeugs realisiert (siehe hierzu insbesondere DE 199 59 521 A1).

Die Führungs- und Spannvorrichtung besteht vorliegend aus einem Führungselement in Form einer Schiene 2, welche um ein Schwenklager 3 schwenkbar angeordnet ist und sich an einem tragenden Bauteil 4, beispielsweise an einem tragenden Bauteil 4 der Karosserie des Fahrzeugs oder am Motor- bzw. Getriebegehäuse abstützt. Die Schiene 2 ist durch einen Starrkörper gebildet und besteht überwiegend aus Metall- und/oder Kunststoff. Ferner weist die Schiene 2 eine mit der Kette 1 des Kettentriebes in direkter Wirkverbindung stehende widerstandsfähige Lauffläche 5 auf.

Um die oben näher beschriebene akustisch relevante Wirkung der während des Betriebs entstehenden polygonal ausgerichteten Kräfte an der Kette 1 ganz oder zumindest teilweise kompensieren bzw. die Spannung der Kette 1 des Kettentriebes beeinflussen zu können, ist ein Aktor 6 vorgesehen, der neben dem oben erwähnten Schwenklager 3 ein zweites Auflager 7 der Schiene 2 darstellt. Der besagte Aktor 6 stützt sich am tragenden Bauteil 4 ab und ist dazu geeignet, die Schiene 2 in Form eines Starrkörpers gegen die Kette 1 des Kettentriebes in Abhängigkeit von Steuerungssignalen eines hier nicht dargestellten Steuerungsgerätes zu verlagern.

Die erfindungsgemäße Führungs- und Spannvorrichtung gemäß Fig. 2 unterscheidet sich vom Stand der Technik nach Fig. 1 dahingehend, dass die Schiene 2 nach Art eines Trägers auf zwei Stützen aufliegend ausgebildet ist, und zwar derart, dass die eine Abstützung durch das ortsfest am tragenden Bauteil 4 angeordnete Schwenklager 3 und die andere Abstützung durch ein eine Verschiebbarkeit in Längsrichtung der Schiene 2 gestattendes Loslager 8 gebildet ist.

Zwischen dem Schwenklager 3 und dem Loslager 8 ist zumindest ein an der Schiene 2 angreifender Aktor 6b angeordnet, welcher durch eine piezoelektrische Struktur gebildet ist. Piezoelektrische Strukturen verfügen über die für diesen Anwendungsfall erforderliche hohe Steifigkeit und Schnelligkeit im Hinblick auf die Ausbildung von Gegenkräften bzw. Gegenimpulsen.

Vorliegend ist der Aktor 6b als Piezo-Linearaktor ausgebildet, der einenends fest an eine in Grenzen elastisch biegsamen Schiene 2 angeordnet ist, und anderenends eine frei schwebende seismische Masse 9 trägt. Er ist somit geeignet, Gegenimpulse bzw. Gegenkräfte gegen die seismische Masse 9 zu erzeugen und so zur Kompensation der von dem Kettentrieb ausgehenden Schwingungen beizutragen. Im Ergebnis wird eine Reduzierung der vom Kettentrieb erzeugten Geräusche erreicht.

Zudem ist der Aktor 6b über eine hier nicht gezeigte Steuerungsleitung mit einem diesbezüglichen Steuerungsgerät verbunden, welches beispielsweise ein Motorsteuerungsgerät sein kann. Mittels des Aktors 6b ist die Schiene 2 derart aktiv mit einer periodischen oder nichtperiodischen Kraft beaufschlagbar, dass durch den Betrieb des Kettentriebes erzeugte und auch in die Schiene 2 geleitete Kräfte bzw. Schwingungen zumindest teilweise kompensierbar sind.

Im Wesentlichen ist dazu vorgesehen, dass durch den Aktor 6b entgegen der Schwingungsrichtung der Schiene 2 gerichtete Gegenimpulse beziehungsweise Gegenkräfte erzeugt werden, welche die ursprüngliche Schwingungsamplitude der Schiene 2 und gegebenenfalls auch benachbarter Teile des Kettentriebes reduzieren oder im besten Fall völlig neutralisieren. Im Besonderen werden mittels des Aktors 6b um 180° zur in die Schiene 2 eingebrachten Schwingung phasenverschobene Schwingungen erzeugt, welche die in die Schiene 2 eingebrachten Schwingungen überlagern und demgemäß auslöschen sollen.

Um unabhängig von der jeweiligen Auslenkung des Aktors 6b eine möglichst ideale Führung der Kette 1 sowie Schwingungsübertragung vom Aktor 6b auf die Schiene 2 und die Kette 1 zu gewährleisten, ist die Schiene 2 in besonders vorteilhafter Weise derart in Grenzen biegeweich ausgebildet, dass eine elastische Biegung derselben innerhalb der mit dem Kettentrieb gemeinsam eingenommenen Ebene möglich ist.

"In Grenzen biegeweich" bedeutet dabei insbesondere, dass die Schiene 2 zum einen die Auslenkung des Aktors 6b wirkungsvoll auf die Kette 1 übertragen kann. Außerdem soll im Rahmen der elastischen Biegung und unabhängig von der Auslenkung des Aktors 6b im Bereich des Loslagers 8 überwiegend der Kontakt zwischen der Schiene 2 und dem tragenden Bauteil 4 erhalten bleiben, indem das freie Ende der Schiene 2 durch die Kette 1 gegen das tragende Bauteil 4 (Loslager 8) gepresst wird, jedoch eine Bewegung des besagten freien Endes in Längsrichtung möglich ist. Durch diese Maßnahme schmiegen sich die Schiene 2 und die Kette 1 weitestgehend ideal aneinander, wodurch außerdem eine komfortable Führung der Kette 1 gewährleistet ist.

Vorliegend ist die Lauffläche 5 der Schiene 2 zur Kette 1 hin und in Laufrichtung derselben gesehen konvex ausgebildet, welches im Hinblick auf die Führung der Kette 1 die gewünschte Funktionalität der gemäß der Erfindung ausgebildeten Schiene 2 vorteilhaft unterstützt. Wie oben bereits erwähnt, ist durch die vorgesehene biegeweiche Ausbildung der Schiene 2 auch eine zusätzliche Dämpfungswirkung zu verzeichnen.

Das Ausführungsbeispiel gemäß Fig. 2 stellt im Besonderen auf Führungs- und Spannvorrichtung ab, die ausschließlich von einem Aktor 6b betreibbar sind. Durch die Erfindung mit erfasst sind jedoch auch Führungs- und Spannvorrichtungen, bei denen dem Aktor 6b in Reihe zusätzlich ein an sich bekannter, hier nicht näher gezeigter mechanisch, beispielsweise mittels Federkraft belasteter, oder ein hydraulisch betreibbarer Kettenspanner zugeordnet ist.

Unter Umständen ist aufgrund der vorstehenden Bauformen der Führungs- und Spannvorrichtung das in Fig. 2 gezeigte reine Schwenklager 3 entbehrlich, da lediglich geringe Schwenkbewegungen realisiert werden müssen, die an sich durch die biegeweiche Ausbildung der Schiene 2 in gewissem Maße möglich sind. Insofern fallen unter dem Begriff "Schwenklager 3" im Zusammenhang mit der hier beschriebenen Erfindung alle solche Lagerstellen, welche die Weiterleitung der durch den Piezo-Linearaktor 6b erzeugten Kräfte schwingungs- bzw. geräuschreduzierend ermöglichen.

Der Aktor 6b ist vorzugsweise innerhalb eines nicht näher gezeigten voll-aktiven Feedback-Regelkreises angeordnet und dementsprechend von dem bereist erwähnten Steuerungsgerät ansteuerbar. Insoweit ist vorgesehen, dass die erforderlichen Steuerungssignale zur Ansteuerung des Aktors 6b vorzugsweise in Abhängigkeit von aktuellen und durch den Betrieb des Kettentriebs in den Kettentrieb eingebrachte sowie sensorisch ermittelte Schwingungen bereitzustellen sind.

Als geeigneter Sensor wird ein Schwingungs- bzw. Beschleunigungssensor, vorzugsweise ein piezoelektrischer Schwingungs- bzw. Beschleunigungssensor mit einer seismischen Masse vorgeschlagen, wie er im Ausführungsbeispiel nach Fig. 2 bereits als Aktor 6b Verwendung findet. Ein derartiger Sensor kann an der Schiene 2 selbst oder anderen geeigneten schwingungsbeaufschlagten Bauteilen des Kettentriebes angeordnet sein.

Möglich ist es auch und wird durch die Erfindung mit erfasst, dass mehrere piezoelektrische Aktoren Verwendung finden, die ihrerseits entweder schwingungserzeugend oder auch als Sensor ausgebildet sind (nicht näher dargestellt).

Möglich ist es ferner, dass der Aktor 6b, als Dämpfungselement (shunted piezo) oder als Schwingungsabsorber (tuned piezo) wirkend, passiv oder semiaktiv schaltbar oder verschaltet ist, wobei gegebenenfalls eine automatische Drehzahlanpassung des Kettentriebes vorgesehen sein kann.

Was die Energieversorgung des Aktors 6b und gegebenenfalls des piezoelektrischen Sensors anbelangt, so können diese eine externe Energiezufuhr aufweisen. Zum anderen können dieselben auch durch Verformung von Piezoelementstrukturen infolge der in Rede stehenden Schwingungen, resultierend aus den in dem Kettentrieb durch den polygonalen Lauf der Kette 1 radialen und tangentialen Kraftschwankungen an der Kette 1 sowie an der Schiene 2, sich mit elektrischer Energie selbst versorgend ausgebildet sein.

### Bezugszeichen

- 1: Kette
- 2: Schiene
- 3: Schwenklager
- 4: Tragendes Bauteil
- 5: Lauffläche (Schiene 2)
- 6: Aktor (gemäß Stand der Technik)
- 6b: Aktor (gemäß Erfindung); Piezo-Aktor
- 7: Auflager
- 8: Loslager
- 9: Seismische Masse
- 10: Armierung

## Patentansprüche

1. Führungs- und Spannvorrichtung für Kettentriebe an Fahrzeugen, mit einem an einem tragenden Bauteil (4) des Fahrzeugs festgelegten sowie in Wirkverbindung mit der Kette (1) des Kettentriebes bringbaren Führungs- und Spannelement, wobei dieses durch eine in der Ebene des Kettentriebes beweglich angeordnete sowie am tragenden Bauteil (4) sich abstützende Schiene (2) gebildet ist, die zur Verringerung von durch den Kettentrieb erzeugten Schwingungen mittels zumindest eines Aktors mit einer in Richtung zur Kette wirkenden Kraft beaufschlagbar ist, wobei die Schiene (2) nach Art eines Trägers auf zwei Stützen lagernd ausgebildet ist, wobei die eine Abstützung durch ein ortsfest am tragenden Bauteil (4) angeordnetes Schwenklager (3) und die andere Abstützung durch ein eine Verschiebbarkeit in Längsrichtung der Schiene (2) gestattendes Loslager (8) gebildet ist, wobei zwischen den beiden Abstützungen (3, 8) der zumindest eine an der Schiene (2) angreifende Aktor angeordnet ist, und bei dem die Schiene (2) derart biegeweich ausgebildet ist, dass eine elastische Biegung derselben innerhalb der mit dem Kettentrieb gemeinsam eingenommenen Ebene möglich ist, **dadurch gekennzeichnet, dass** der Aktor als Piezo-Linearaktor (6b) ausgebildet ist, der einenends fest mit der Schiene (2) verbunden ist und anderenends eine seismische Masse (9) trägt.

2. Führungs- und Spannvorrichtung nach Anspruch 1, **dadurch gekennzeichnet, dass** die Schiene (2) zumindest im Bereich einer Stütze (3, 8) ein überstehendes elastisch verformbares Ende aufweist.

3. Führungs- und Spannvorrichtung nach Anspruch 1 oder 2, **dadurch gekennzeichnet, dass** der Aktor (6b) innerhalb eines voll-aktiven Feedback-Regelkreises angeordnet und von einem zugeordneten Steuerungsgerät ansteuerbar ist.

4. Führungs- und Spannvorrichtung nach Anspruch 3, **dadurch gekennzeichnet, dass** die Steuersignale zur Ansteuerung des Aktors (6b) in Abhängigkeit von aktuellen und durch den Betrieb des Kettentriebes in den Kettentrieb eingebrachten sowie sensorisch ermittelten Schwingungen bereitstellbar sind.

5. Führungs- und Spannvorrichtung nach Anspruch 4, **dadurch gekennzeichnet, dass** zumindest ein Sensor zur Ermittlung der durch den Betrieb des Kettentriebes in den Kettentrieb eingebrachten Schwingungen durch einen Schwingungs- bzw. Beschleunigungssensor gebildet ist.

6. Führungs- und Spannvorrichtung nach Anspruch 5, **dadurch gekennzeichnet, dass** der Schwingungs- bzw. Beschleunigungssensor ein piezoelektrischer Schwingungs- bzw. Beschleunigungssensor mit einer seismischen Masse ist.

7. Führungs- und Spannvorrichtung nach einem der vorherigen Ansprüche, **dadurch gekennzeichnet, dass** der Aktor (6b) sowohl krafterzeugend als auch als Sensor ausgebildet ist.

8. Führungs- und Spannvorrichtung nach einem der vorherigen Ansprüche, **dadurch gekennzeichnet, dass** der Aktor (6b) als Dämpfungselement (shunted piezo) oder als Schwingungsabsorber (tuned piezo) wirkend, passiv oder semiaktiv schaltbar oder verschaltet ist.

## Claims

1. Guiding and tensioning apparatus for chain drives in vehicles, having a guiding and tensioning element which is fixed on a supporting component (4) of the vehicle and can be brought into operative connection with the chain (1) of the chain drive, the said guiding and tensioning element being formed by a rail (2) which is arranged movably in the plane of the chain drive, is supported on the supporting component (4) and, in order to reduce oscillations produced by the chain drive, can be loaded with a force which acts in the direction of the chain by means of at least one actuator, the rail (2) being configured so as to be mounted on two supports in the manner of a beam, one support being formed by a pivoting bearing (3) which is arranged in a stationary manner on the supporting component (4) and the other support being formed by a floating bearing (8) which permits a displaceability in the longitudinal direction of the rail (2), the at least one actuator which acts on the rail (2) being arranged between the two supports (3, 8), and in which the rail (2) is of pliable configuration such that an elastic deflection of the said rail (2) is possible within the plane which is assumed jointly with the chain drive, **characterized in that** the actuator is configured as a linear piezoelectric actuator (6b) which is connected fixedly to the rail (2) at one end and carries a seismic mass (9) at the other end.

2. Guiding and tensioning apparatus according to Claim 1, **characterized in that** the rail (2) has a projecting elastically deformable end at least in the region of a support (3, 8).

3. Guiding and tensioning apparatus according to Claim 1 or 2, **characterized in that** the actuator (6b) is arranged within a fully active feedback closed loop and can be actuated by an associated control unit.

4. Guiding and tensioning apparatus according to Claim 3, **characterized in that** the control signals for actuating the actuator (6b) can be provided as a function of vibrations which are current, are introduced into the chain drive by the operation of the chain drive and are determined by sensor.

5. Guiding and tensioning apparatus according to Claim 4, **characterized in that** at least one sensor for determining the vibrations which are introduced into the chain drive by the operation of the chain drive is formed by a vibration or acceleration sensor.

6. Guiding and tensioning apparatus according to Claim 5, **characterized in that** the vibration or acceleration sensor is a piezoelectric vibration or acceleration sensor with a seismic mass.

7. Guiding and tensioning apparatus according to one of the preceding claims, **characterized in that** the actuator (6b) is configured both to generate a force and as a sensor.

8. Guiding and tensioning apparatus according to one of the preceding claims, **characterized in that** the actuator (6b) can be connected or is connected to be passive or semi-active, acting as a damping element (shunted piezo) or as a vibration absorber (tuned piezo).

## Revendications

1. Dispositif de guidage et de tension pour des transmissions par chaîne sur des véhicules, comprenant un élément de guidage et de tension fixé à un composant porteur (4) du véhicule et pouvant être amené en liaison active avec la chaîne (1) de la transmission par chaîne, celui-ci étant formé par un rail (2) disposé de manière mobile dans le plan de la transmission par chaîne et qui s'appuie sur le composant porteur (4), lequel peut être soumis à une force qui agit dans une direction par rapport à la chaîne au moyen d'au moins un actionneur afin de réduire les oscillations générées par la transmission par chaîne, le rail (2) étant réalisé sous la forme d'un support reposant sur deux appuis, l'un des appuis étant réalisé par un palier pivotant (3) disposé en un endroit fixe sur le composant porteur (4) et l'autre appui par un palier libre (8) qui permet un coulissement dans le sens longitudinal du rail (2), l'au moins un actionneur qui vient en prise sur le rail (2) étant disposé entre les deux appuis (3, 8) et le rail (2) étant réalisé souple en flexion de telle sorte qu'une flexion élastique de celui-ci est possible à l'intérieur du plan commun occupé par la transmission à chaîne, **caractérisé en ce que** l'actionneur est réalisé sous la forme d'un actionneur linéaire piézoélectrique (6b) qui est relié à demeure avec le rail (2) à une extrémité et qui, à l'autre extrémité, porte une masse sismique (9).

2. Dispositif de guidage et de tension selon la revendication 1, **caractérisé en ce que** le rail (2) présente au moins dans la zone d'un appui (3, 8) une extrémité en saillie résiliente.

3. Dispositif de guidage et de tension selon la revendication 1 ou 2, **caractérisé en ce que** l'actionneur (6b) est disposé à l'intérieur d'un circuit de régulation à contre-réaction pleinement actif et peut être commandé par un contrôleur associé.

4. Dispositif de guidage et de tension selon la revendication 3, **caractérisé en ce que** les signaux de commande destinés à commander l'actionneur (6b) peuvent être délivrés en fonction des oscillations actuelles et induites dans la transmission par chaîne par le fonctionnement de la transmission par chaîne et aussi déterminées par détection.

5. Dispositif de guidage et de tension selon la revendication 4, **caractérisé en ce qu'**au moins un capteur destiné à déterminer les oscillations induites dans la transmission par chaîne par le fonctionnement de la transmission par chaîne est formé par un capteur d'oscillations ou d'accélération.

6. Dispositif de guidage et de tension selon la revendication 5, **caractérisé en ce que** le capteur d'oscillations ou d'accélération est un capteur d'oscillations ou d'accélération piézoélectrique avec une masse sismique.

7. Dispositif de guidage et de tension selon l'une des revendications précédentes, **caractérisé en ce que** l'actionneur (6b) est réalisé à la fois pour générer une force et aussi sous forme de capteur.

8. Dispositif de guidage et de tension selon l'une des revendications précédentes, **caractérisé en ce que** l'actionneur (6b), qui agit en tant qu'élément amortisseur (piézoélectrique shunté) ou en tant qu'absorbeur des oscillations (piézoélectrique accordé), peut être connecté ou est connecté de manière passive ou semi-active.
